# EUROPEAN PATENT SPECIFICATION

(11) **EP 1 318 316 B1**
(45) Date of publication and mention of the grant of the patent: **01.03.2006**
(21) Application number: 02258374.4
(22) Date of filing: 04.12.2002
(51) Int. Cl.: F16B 43/00, F16B 5/02, B25B 23/10

(54) **Washer, fastener provided with a washer, and method of and power tool for fastening with the use of the washer**
Scheibe, Befestiger mit einer Scheibe sowie Verfahren und Kraftwerkzeug zu einer die Scheibe benutzenden Befestigung
Rondelle, dispositif de fixation à rondelle, ainsi que méthode et outil motorisé pour une fixation utilisant la rondelle

(30) Priority: 06.12.2001 US 10377; 11.04.2002 US 120343
(43) Date of publication of application: 11.06.2003
(73) Proprietor: Junkers, John K., Saddle River, New Jersey 07458 (US)
(72) Inventor: Junkers, John K., Saddle River, New Jersey 07458 (US)
(74) Representative: Hanson, William Bennett

(56) References cited:
- EP-A1- 0 708 259
- EP-A2- 1 080 847
- FR-A- 693 392
- FR-E- 38 199
- US-A- 1 678 409
- US-A- 5 640 749
- DATABASE WPI Week 8939 Derwent Publications Ltd., London, GB; AN 1989-283940 XP002258845 -& SU 1 444 567 A (PROIZV OB AVTOREMONTNOMUPROIZ), 15 December 1988 (1988-12-15)

## Description

The present invention relates to a washer, a fastener provided with a washer, and a method of and power tool for fastening with the use of the washer.

It is known to fasten objects to one another with a fastener which has a multi-part replacement nut, for example including an inner sleeve, an outer sleeve, and a washer. Such a replacement nut is disclosed for example in US 5,341,560. Another replacement nut is disclosed in US 6,254,323 in which a bolt has a spline underneath its upper thread, to which a washer is non-rotatably connected, and the bolt also has engaging means for applying a reaction force, while an active force of the same tool turns the nut on the bolt thread and the washer face. In the fastener disclosed in both above mentioned patents, the common features are the use of the action and reaction force of one tool, the elimination of reaction arms on torque power tools, the conversion of torque to torsion-free bolt stretching and obtaining for the first time the desired residual bolt load rather than a torque, which is estimated based on calculated frictions rather than on actual frictions or a tension, which is based on estimated bolt relaxation when the force is transmitted from the elongated bolt to the hand-tight nut.

The problem found in the industry with the fastener disclosed in US 5,341,560 is that, since the nut has to be made with two sleeves whose outside diameter has to meet the outside diameter of a regular nut, both sleeves have less material than a regular nut. This requires the use of high strength materials, which causes reluctance on the part of the customers to change materials and fear of the unknown. In the fastener disclosed in US 6,254,323, the bolt needs to be altered, which is not just costly but not easily acceptable by the industry. In other words, the fastener disclosed in US 5,341,560 requires alteration of the nut, while the fastener disclosed in our US 6,254,323 requires alteration of the bolt. In addition, both versions are expensive to produce, adding to customers' reluctance to purchase these fasteners.

US-A-1678409 describes a washer according to the preamble of claim 1.

Accordingly, it is an object of the present invention to provide a washer, a fastener provided with a washer, and a method of and a power tool for fastening with the use of the washer, which avoid the disadvantages of the prior art.

In keeping with these objects, one aspect of the present invention provides a washer according to claim 1. In particular, the washer has a body having an axis and provided with a first bearing face surface located at one axial side and adapted to cooperate with a nut, and a second bearing face surface located at an opposite axial side and adapted to cooperate with an object. At least one third turning resistant surface of the washer is adapted to cooperate with a thread of the bolt, so that when the nut is turned with a given torque in one direction and said body of the washer receives simultaneously said given torque in an opposite direction, only the nut turns to elongate or relax the bolt while the body of the washer and the bolt remain rotation stationary.

Another aspect of the present invention provides a threaded fastener for connecting at least two parts which constitute an object, according to claim 15. The fastener comprises a bolt having a thread and an axis and being introduced into the object; a nut screwable on the bolt; and a washer to be applied between the nut and the object. In particular the washer has a body having an axis and provided with a first bearing face surface located at one axial side and adapted to cooperate with the nut, and a second bearing face surface located at an opposite axial side and adapted to cooperate with the object. At least one third turning resistant surface of the washer is adapted to cooperate with a thread of the bolt, so that when the nut is turned with a given torque in one direction and said body of the washer receives simultaneously a given torque in an opposite direction, only the nut turns to tighten or loosen the bolt while the body of the washer and the bolt remain rotation stationary.

Still another aspect of the present invention provides in a method of assembling at least two parts with one another, according to claim 16. In particular, the method comprises the steps of introducing a bolt having a thread into the at least two parts so that a free end of the bolt extends outwardly beyond at least one side of the at least two parts; placing a friction washer on said free end portion of said bolt so that said friction washer engages with said thread of said bolt to create a turning friction between said washer and said bolt and so as to abut against said at least one side of the at least two parts; threadably connecting a nut to said free end portion of said bolt so as to abut against the friction washer and to form an assembly; and placing a torque power tool on the assembly so as to tighten or loosen the nut with a turning portion of said torque power tool connected to the nut to overcome a threaded friction with the bolt and a facial friction with the friction washer to turn the nut, and with a reaction portion of the torque power tool connected to the washer to absorb a reaction force due to a facial friction of the friction washer with the nut, with a facial friction of the washer with said at least one side of the object parts and a turning friction of the bolt selected so that the washer and the bolt do not turn but absorbs the reaction force of the torque power tool.

Still another aspect of the present invention provides an assembly incorporating a power tool for fastening objects, according to claim 17. The power tool comprises a housing provided with a non-rotatable element; a power drive in said housing and provided with a rotatable driving element; and a fastener part including a bolt having a thread and an axis and introducible into parts forming an object, a nut screwable in said bolt and cooperating with said rotatable driving element, and a washer to be applied between said nut and said object and cooperating with said non-rotatable element. In particular, the washer has an axis and is provided with a first bearing face surface located at one axial side and adapted to cooperate with said nut, a second bearing face surface located at an opposite axial side and adapted to cooperate with said object, and at least one third turning resistant adapted to cooperate with said thread of said bolt, so that when the driving element turns said nut with a given active force in one direction and said washer is held stationarily by a reactive force applied by said non-rotatable element of said housing, only said nut turns to tighten or loosen said bolt, and said washer remains rotation stationary while said bolt elongates or relaxes in an axial direction.

A preferred feature of the present invention is that the third turning resistant surface of the washer increases its turning resistance and/or its resistance toward an axial movement in use according to the increase in drag friction created by the nut onto the bolt when it is under tension, by having the turning resistant surface squeezed further into the bolt thread and against the inside of one of the washer parts as a result of the drag friction of the bolt or the turning force applied to the washer if the given force is applied to it in the opposite direction.

In accordance with another optional feature of the present invention, the turning resistant portion of the washer has for example a ring having an inward side engage in the bolt thread and an outward side having gear teeth to turn a gear engaging in the gear teeth of the ring and also engaging in the inward side of the washer body with two facial friction areas, whereby the gear is connected to a plate between the washer body and the object so that when the bolt turns along with the nut the turning resistant portion of the washer wants to turn along in the same direction, trying to turn the gear, which in turn tries to turn the washer body in the opposite direction to the track friction applied to its bearing face surface by the nut so that the bolt and the washer with its parts remains rotation stationary while the nut is turned.

As the drag friction created by the nut on the bolt can be quite high, the nut in no way diminishes the bolt load resulting from the torque applied to the nut when the bolt stands still. It is the object of the present invention to stop the bolt from turning along with the nut, but to allow the bolt to move in an axial direction when the nut is turned. Therefore, to stop the bolt from turning with or in the third turning resistant surface of the washer when the drag friction is high, a wedge can be inserted between the inner surface of the outer washer part and the outer surface of the inner washer part to increase the turning friction created by the turning resistant surface of the washer with the bolt.

The wedge part can, but does not to have to, project above the first bearing surface. When it does project and the nut is turned down on it, the wedge part moves down and wedges the turning resistant surface into the bolt thread to stop all turning of the bolt relative to it. When it does not project and the turning resistant surface moves up as a result of the turning of the bolt, the upward movement causes it to be pressed against the bolt thread to stop the bolt from turning, in which case it is best located within the two bearing faces of the washer in a way that it also eliminates turning of the turning resistant surface of one washer part relative to the other washer part. Therefore when the bolt turns along the nut and the turning resistant surface arises as a result of it, the turning resistant surface gets squeezed further into the bolt thread, the bolt stops turning as a result of it and the turning resistant surface rises only with the bolt stretch created by the turning nut.

When the washer and the fastener are designed in accordance with the present invention and the method is performed in accordance with the present invention, regular nuts and regular bolts can be used. In other words the customer can use whatever he has adding merely a washer. The benefit is quite remarkable. Firstly, the product is much less expensive than each of the products in the above-mentioned patents. Secondly, the customer uses his approved bolts and nuts. Third, instead of reacting on a part of the nut directly as in US 5,341,560 or indirectly as in US 5,946,789 by passing the reaction force through the washer to a part of the nut, the reaction force is solely absorbed by the washer. Furthermore, the solution proposed in the present application provides the identical benefits as the solutions disclosed in the above mentioned patents, some of which are a torsion-free elongation of the free portion of the bolt, a known coefficient of friction and thus a known bolt load, a reaction-arm free, backup-wrench free and hands free hydraulic torque tool use, and a bridge- and puller-free bolt stretching. In other words, torque is converted into torsion- and side-load-free bolt elongation to the desired bolt load by means of a torque power tool, which can be also applied to torque regular nuts with a reaction member. It needs to be considered that most bolts in the industry are through bolts with a nut on the other side or blind bolts threaded into the bottom part of the two parts.

The holding socket of the power tool, which is connected to the non-rotatable element of the power tool housing, can engage the washer of the invention, for example via a pin between the socket and indents on the hex corner of the washer. The elimination of the reaction arm, usually connected to the motor (cylinder) housing of a torque tool, eliminates the tool's internal torsion, thus making it more reliable. In addition, the operation becomes safer due to the elimination of pinch points because the tool has no reaction arm and does not need to be held against a reaction point during operation, and backup wrenches are no longer required as the bolt and thus the nut on the other side do not turn any longer. In addition, the nut does not scratch or gall the object surface.

It is known that if a torque power tool is applied to a fastener such that the nut is turned by the active force of the torque power tool and the reaction is absorbed by a regular washer underneath the nut, then either the nut or the washer will turn at will or the bolt turns along with the nut and nothing is accomplished, or the bolt end tightens further into the blind hole causing the bottom threads to mushroom which makes disassembly extremely difficult. The reason for that is that the nut has two friction areas, the threaded connection with the bolt which creates a drag friction and the facial area with the washer, whereby the washer has one facial area with the nut and one facial area with the two parts to be assembled. In other words, both have two friction areas. While it is correct that a threaded friction is a little less than a facial friction, the difference is minute as the facial friction between the washer and the nut balance each other out, so that there is merely one minute difference between the nut and the washer. At the same time if the bolt is a through bolt, the thread friction between the bolt and the nut and thus the bolt turning resistance is obviously much less than the facial friction of the washer and while the washer would absorb the reaction force without turning, the bolt would turn along with the nut and nothing is accomplished unless a back-up wrench is used to stop the bottom nut from turning. Therefore, neither is enough to guarantee that only the nut turns, which is why the third friction area had to be introduced to the washer. This however is not enough to guarantee that only the nut turns.

On the other hand, if the washer in accordance with the present invention is connected with the thread of the bolt, the bolt cannot turn along with the nut because the washer will have to lift up which it cannot because the nut is on top of it. This would make a bolt elongation resulting from turning down the nut impossible. The present invention therefore provides a bolt thread engaging washer section, which is connected with the bolt thread. Since this alone would not help because this section could move either along with the bolt by rotating or upward if the bolt rotates in it. This in turn would allow the bolt to turn along with the nut as the section rotates or moves up. Therefore in accordance with a further new feature of the present invention, the bolt thread engaging means is frictionally connected with the body of the washer, so that its rotational or upward movement is subject to overcoming a friction greater than a drag friction created on the bolt by the turning nut, to stop the bolt from turning. This friction in conjunction with the two facial frictions of the washer assures that the bolt does not move along with the nut, that the bolt is stretched, and that the washer and its bolt thread engaging section do not rotate while the nut is being turned.

It is important to understand that when the bolt turns along with the nut as a result of the drag friction and the bolt thread engagement section turns along with the bolt or moves upward in the washer nothing is accomplished. This explains why either movement of the bolt thread engaging section has to be restricted by requiring a greater force than that exerted by the drag friction created by the nut onto the bolt even when the bolt is under load. This can be accomplished in various ways as explained by some examples below without limiting the invention.

If the reaction force of the tool is applied to the outside of the washer through engagement means thereon, it is also possible to have a pin or the like connected at one end to the thread engagement section and having its other end sticking out of the circumference of the washer so that when the tool is connected with the washer the pin is pushed inwardly, pushing the thread engagement section inwardly into the bolt thread.

The invention will be best understood from the following description of specific embodiments, given by way of example only, when read in connection with the accompanying drawings, in which:
Figures 1-6 are views of a threaded fastener provided with a washer in accordance with various embodiments of the present invention; and
Figure 7 is a view illustrating a fastening process with the use of the fastener and the washer in accordance with the present invention, and a power tool.

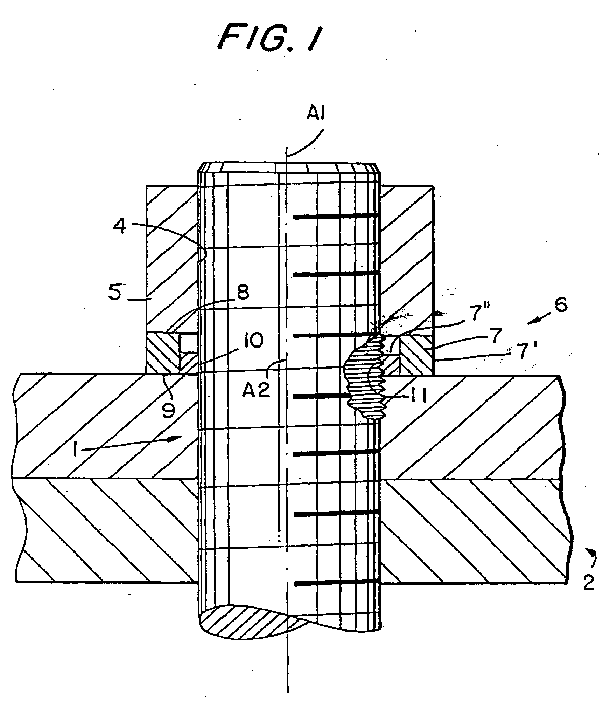

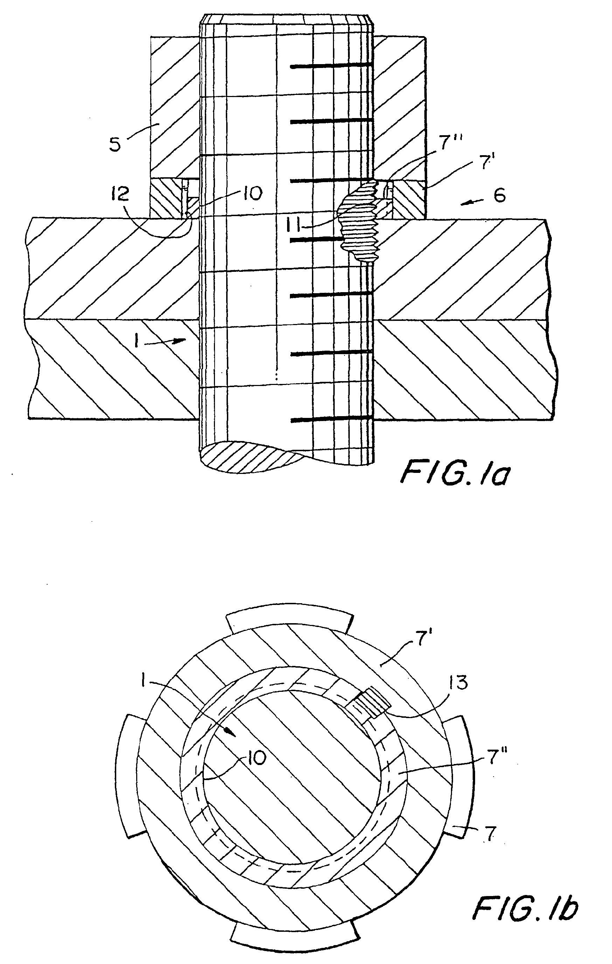

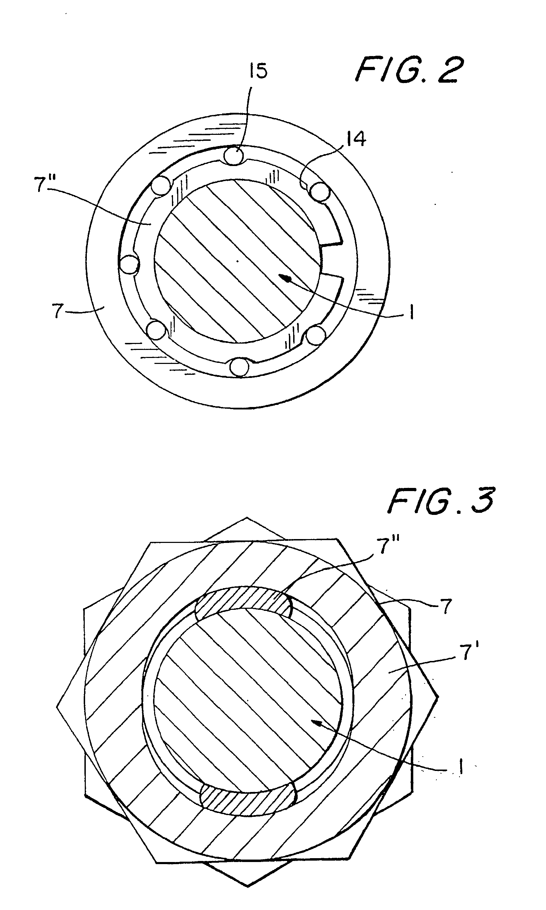

Figures 1 and 2 show a threaded fastener which has a bolt identified with reference numeral 1 and introducible into an object which is composed for example of two parts to be assembled with one another as identified with reference numeral 2. The fastener further has a nut, which is identified with reference numeral 5. The nut is provided with an inner thread 4, which is screwed on an outer thread of the bolt 1.

The threaded fastener further has a washer, which is identified as a whole with reference numeral 6. The washer 6 has a body identified with reference numeral 7 which is provided with a first upper bearing face surface 8 cooperating with the nut 5, a second lower bearing face surface 9 cooperating with the object 2 or in particular with a surface of one of the parts to be assembled with one another, and at least one turning resistant surface which is identified with reference numeral 10. The first and second bearing face surfaces are spaced from one another in an axial direction or in other words in the direction of an axis A1 of the washer which coincides with an axis A2 of the bolt The at least one third turning resistant surface 10 is located radially inwardly of the body 7 of the washer 6. The third turning resistant surface 10 is formed so as to engage with or wedge in the thread of the bolt 1, for example by providing a corresponding thread 11 on the turning resistant surface 10.

As shown in Figure 1, the body 7 is composed of two parts 7' and 7" which are located radially adjacent to one another, so that the part 7" is located radially inwardly of the part 7'. The turning resistant surface 10 with the bolt thread engaging means 11 is provided radially inwardly on the part 7". The parts 7' and 7" are connected with one another so as to avoid turning relative to one another, but to permit a movement relative to one another in an axial direction. For this purpose, the portions 7' and 7" can be frictionally connected with one another, for example by being press-fit to create a greater resistance toward movement than the turning force applied by the bolt and so as to stop the bolt from turning along with the nut and permitting an axial movement of the part 7" relative to the part 7' when the bolt is pulled up by the turning nut.

In the embodiment shown in Figure 1a, the turning of the part 7" relative to the part 7' is stopped by interengaging splines 12, for example provided on the radially outer surface of the part 7" and a radially inner surface of the part 7', which permits the axial movement of the part 7" only.

In the embodiment shown in Figure 1b, the turning of the part 7" relative to the part 7' is prevented for example by a key 13 which permits axial movement between the parts 7' and 7" only.

As shown in Figure 2 the part 7" can be for example formed as a split ring, and its radially outward surface can have inwardly rounded pockets 14 extending in the axial direction and can contain pins 15 which are coaxial with the bolt axis and which sit partially in the pockets and abut the radially inward surface of the part 7'. They force the split ring inwardly into the bolt thread if a turning motion is introduced into the part 7' and/or the 7", while limiting the turning between the parts 7' and 7" and also adding a further friction to the movement of the parts 7' and 7" relative to one another in the axial direction.

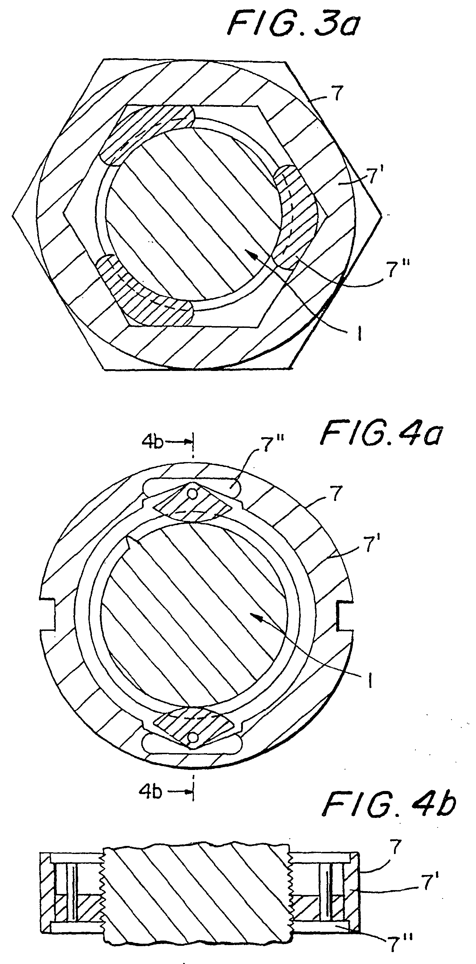

As shown in Figure 3 the part 7' can have an oval inward surface whose rounded portion has a given dimension, while the part 7" can have at least one ring section engaging the bolt thread and located in the rounded portion by another dimension. Therefore the ring section is forced inwardly into the bolt thread if a turning motion is introduced to the part 7' and/or the part 7" in either direction, while adding restrictions to the movement of the part 7' and the part 7" relative to one another.

In accordance with a further embodiment shown in Figure 3a, the part 7' can be other than round or oval. It can have a shape which is different from the round or oval shapes.
As shown in Figures 4a and 4b, the part 7" can be at least one part which for example has one of its sides banking on the inward surface of the part 7' and formed to restrict the turning motion of the part 7". It has its outer side engaging with the bolt thread and formed with increasing radius relative to the above mentioned one side, so as to turn within its restrictions and thus engage more and more the bolt thread with its outer side, while squeezing more and more with its other side against the inward surface of the part 7' to increase its friction with the part relative to the axial movement of the part 7".

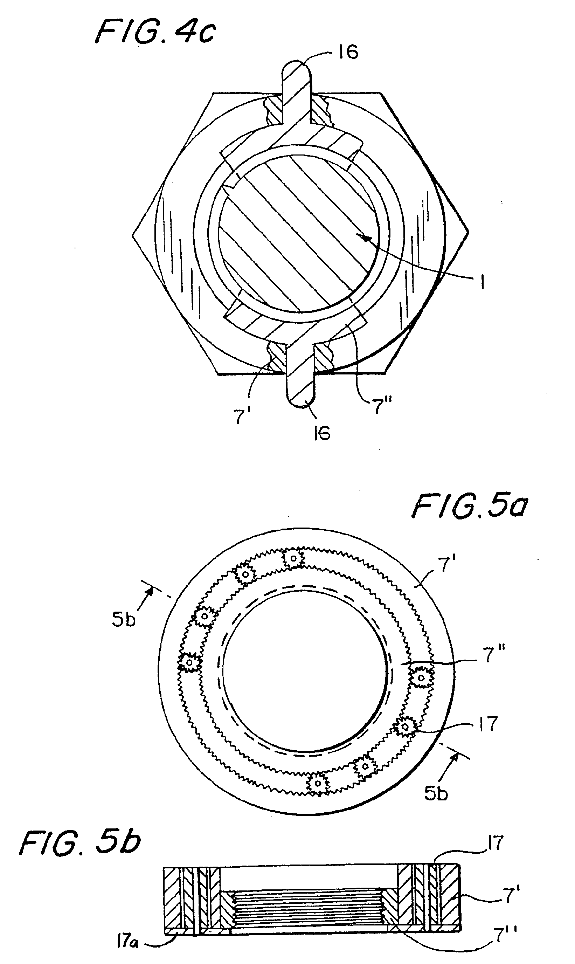

In the embodiment of Figure 4c a pin 16 sits for example on the part 7" and extends outwardly through the part 7' to extend over the outer circumference of the part 7'. Therefore when the engaging means of the tool are connected to the engaging means of the part 7' the pin 16 is pushed inwardly to push the thread engaging sections into the bolt thread, so that the washer can be placed on the bolt without requiring the turning of the washer down the extending bolt threads and so that the axial movement of the thread engaging section is subject to overcoming the friction between it and the pin 16.

In the embodiment of Figures 5a and 5b, the washer is formed so as to stop the bolt and the washer from turning along with the nut when the nut is turned by a power tool. Therefore, a turning resistant portion 7" of the washer 7 comprises for example a ring having an inward side engaging in the bolt thread and an outward side having gear teeth to turn a gear 17 engaging in the gear teeth of the ring and also engaging in the inward side of the washer body with the two facial friction areas. The gear 17 is connected to a plate 17a between the washer body and the object so that when the bolt turns along with the nut, the turning resistant portion of the washer wants to turn in the same direction trying to turn the gear which in turn tries to turn the washer body in the opposite direction to the drag friction applied to its bearing face surface by the nut, so that the bolt and the washer with its parts remains rotation stationary while the nut is turned.

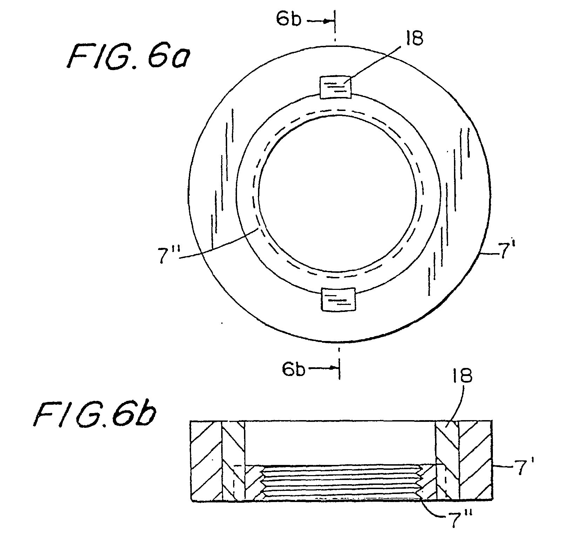

In the embodiment of Figures 6a and 6b the washer is formed so as to stop the bolt from turning in the turning resistant portion of the part 7" by providing at least one wedge-shaped part 18 between the parts 7' and 7". It stops the part 7" from turning in the part 7' so that the drag force of the turning bolt can only raise the turning resistant portion of the washer which, however, wedges it further into the bolt thread until the bolt stops turning and the turning resistant surface moves only axially with the bolt.

The lower bearing face surface 9 of the body of the washer can be formed to have a high friction relative to the object, for example, roughened.

In accordance with the invention, it is also possible that the bolt thread engaging means has a different angle than a thread of the bolt, to create a greater friction between it and the bolt thread. It is also possible that the bolt thread engaging means is not threaded, but has a surface softer than a surface of the bolt to cause friction.

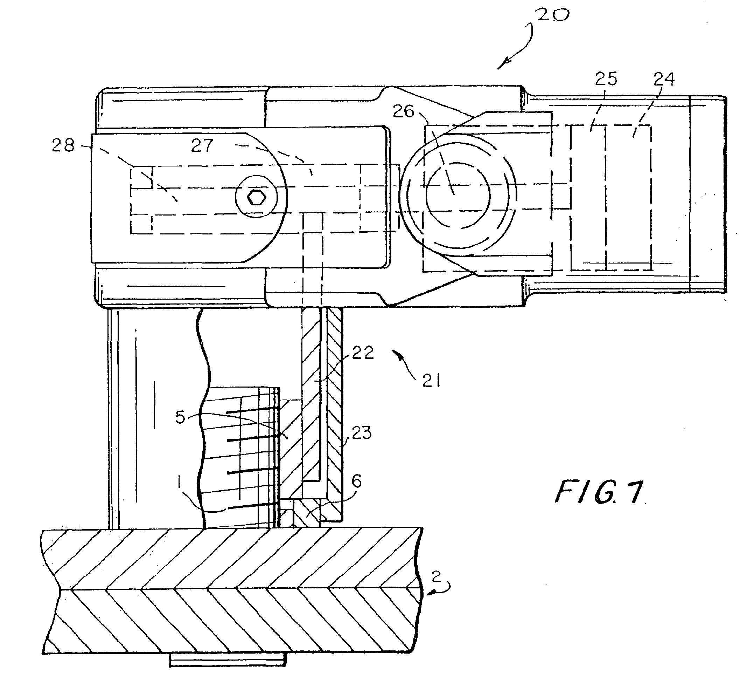

Figure 7 shows a power tool in accordance with the present invention. The power tool can be electrically driven, pneumatically driven, hydraulically driven, or manually driven. It has a power tool part with a housing identified as a whole with reference numeral 20, and a power drive in the housing and identified with reference numeral 21. The power tool part further has a rotatable driving element 22 which is to be connected to a nut of a fastener and turn the nut to overcome a thread friction with a bolt and a facial friction with a washer to turn the nut, and a non-rotatable element 23 connectable to a washer to absorb the reaction force due to the facial friction of the washer with the nut, its facial friction with one side of two parts to be fastened with one another, and its turning friction with the bolt, so that the washer and the bolt do not turn but absorb the reaction force of the power tool.

The power drive of the power tool part can include a cylinder 24, a piston 25 reciprocatingly movable in the cylinder under the action of a working fluid medium, a piston rod 26 extending outwardly beyond the cylinder 24 and pivotably connected with at least one driving plate 27 which carries a not shown pawl engaged with a ratchet 28 so as to form a pawl ratchet mechanism, with the ratchet being turnable and connected with the rotatable driving element 22, while the non-rotatable element 23 is fixedly connected with the housing.

When as shown in Figure 7 the power tool part is placed on the fastener so as to tighten or loosen the nut 5, the working fluid medium in the cylinder 24 displaces the piston 25 which in turn through the pawl-ratchet mechanism turns the ratchet 28, and as a result the rotatable driving element 22 which is connected to the nut 5 turns the nut to overcome the thread friction with the bolt 1 and the facial friction with the washer 6, while the non-rotatable element 23 which is immovably connected to the housing is connected to the washer 6 to absorb the reaction force due to the facial friction of the washer 6 with the nut 5, its facial friction with one side of the parts 2, and its turning friction with the bolt 1, so that the washer 6 and the bolt 1 do not turn, but absorb the reaction force. During the operation of the inventive power tool, the action force is applied to the nut 5, and the equal reaction force is applied to the washer 6.

It is to be understood that in order to engage the nut 5 by the turning part 22 of the torque power tool 21, the nut must have corresponding connecting means formed, for example as a polygonal shape of the outer surface of the nut, as splines provided on the outer surface of the nut, etc. On the other hand, in order to connect the reaction portion 23 of the torque power tool 21 to the washer 6, the washer also must be provided with connecting means formed for example also as a polygonal outer surface of the washer, as a plurality of splines of the outer surface of the washer, etc.

While the invention has been illustrated and described as embodied in washer, fastener provided with a washer, and method of and a tool for fastening with the use of the washer, it is not intended to be limited to the details shown, since modifications and structural changes may be made without departing in any way from the present invention as defined by the appended claims.

## Claims

1. A washer (6) to be applied between an object (2) and a nut (5) threadingly connected with a bolt (1) which has an axis (A2) and is introduced into the object, the object (2) including at least two parts to be assembled, the washer comprising a body (7) having an axis (A1) and provided with a first bearing face surface (8) located at one axial side, adapted to cooperate with the nut (5) and having a facial friction with the nut, a second bearing face surface (9) located at an opposite axial side, adapted to cooperate with the object (2) and having a facial friction with the object, and a third surface (10) adapted to cooperate with a thread of the bolt (1) in a turning resistant manner and located inside said body (7), said body including a radially inner part (7") having a radially outer surface and bolt thread engaging means (11) formed on said third turning resistant surface to connect with a thread of the bolt (1), and also including a radially outer part (7') having a radially inner surface, **characterised in that** said radially outer and inner surfaces of said radially inner (7") and radially outer (7') parts cooperate with one another so that said radially inner part (7") can not rotate freely inside said radially outer part (7') during tightening but is displaced axially relative to said radially outer part upon bolt elongation, so that when the nut (5) is turned with a given torque in one direction and said body of the washer (6) receives simultaneously said given torque in an opposite direction, only the nut (5) turns to elongate or relax the bolt (1) while said body of the washer (6) remains rotation stationary and the bolt does not turn but elongates or relaxes in an axial direction.

2. A washer as defined in claim 1, wherein said at least one third turning resistant surface (10) is a radially inner surface of said body (7) which is coaxial with said axis (A1) of said body and is provided with said bolt thread engaging means (11).

3. A washer as defined in claim 2, further comprising means for pressing and wedging said bolt thread engaging means (11) in the bolt thread during turning of the nut (5) and including inclined surface means (12, 14) provided on one of said parts (7', 7") and acted upon during turning of the nut (5) so as to press said inner part (7") in a radially inward direction toward the bolt (1).

4. A washer as defined in claim 3, further comprising pin means (15) arranged between said parts (7', 7") and acting on said inclined surface means (14) to press said inner part (7") in a radially inward direction toward the bolt (1).

5. A washer as defined in claim 2, further comprising means for connecting said parts (7', 7") with one another so that they are not freely rotatable relative to one another but axially movable relative to one another, said connecting means including a plurality of splines (12) provided on said parts and engaging with one another.

6. A washer as defined in claim 2, further comprising means for connecting said parts (7', 7") with one another so that they are not freely rotatable relative to one another but axially movable relative to one another, said connecting means including means for press fitting said parts with one another.

7. A washer as defined in claim 2, further comprising means for connecting said parts (7', 7") so that they are not freely rotatable relative to one another but axially movable relative to one another, said connecting means including key means (13) provided between said parts.

8. A washer as defined in claim 2, 3 or 4, wherein at least one of said parts (7', 7") has a non-round surface facing the other of said parts and cooperating with said other part so that said parts (7', 7") are not freely rotatable relative to one another but axially movable relative to one another.

9. A washer as defined in claim 2, 3 or 4, wherein at least one of said parts (7', 7") has a cross-section which cooperates with the other of said parts so that said parts (7', 7") are not freely rotatable relative to one another but axially movable relative to one another.

10. A washer as defined in claim 2, further comprising means (16) for pressing said inner part (7") toward the thread of the bolt (1) and movable between an inoperative position in which it does not press said inner part toward the thread of the bolt and an operative position in which it is displaced by an outside tool toward said inner part (7") so as to press said inner part toward the thread of the bolt (1).

11. A washer as defined in claim 2, further comprising connecting means (17) for connecting said parts (7', 7") with one another so that they are not freely rotatable relative to one another but axially movable relative to one another, said connecting means including ring gear means (17) engaging with both said parts.

12. A washer as defined in claim 11, wherein said gear means (17) is provided with plate means (17a) adapted to be located between said body (7) and the object (2).

13. A washer as defined in claim 2, further comprising means (18) for connecting said parts with one another so that they are not freely rotatable relative to one another but axially movable relative to one another; said connecting means including wedge means (18) provided between said parts.

14. A washer as defined in any preceding claim, wherein said second bearing face surface (9) is formed so as to have a high friction relative to the object (2), for example, roughened.

15. A threaded fastener for connecting at least two parts which constitute an object (2), comprising a bolt (1) having a thread and an axis (A2) and introducible into the at least two parts forming an object; a nut (5) screwable on said bolt; and a washer (6) to be applied between said nut (5) and said object (2), said washer comprising a body (7) having an axis (A1) and being provided with a first bearing face surface (8) located at one axial side, adapted to cooperate with said nut (5) and having a facial friction with the nut, a second bearing face surface (9) located at an opposite axial side, adapted to cooperate with said object (2) and having a facial friction with the object, and a third surface (10) adapted to cooperate with said thread of said bolt (1) in a turning resistant manner and located inside said body (7), said body including a radially inner part (7") having a radially outer surface and bolt thread engaging means (11) to connect with a thread of the bolt (1), and also including a radially outer part (7') having a radially inner surface, **characterised in that** said radially outer and inner surfaces of said radially inner (7") and radially outer (7') parts cooperate with one another so that said radially inner part (7") can not rotate freely inside said radially outer part (7') during tightening but is displaced axially relative to said radially outer part upon bolt elongation, so that when said nut (5) is turned with a given torque in one direction and said body (7) of the washer (6) receives simultaneously said given torque in an opposite direction, only said nut turns to elongate or relax said bolt (1) while said body (7) of the washer remains rotation stationary and said bolt does not turn but elongates or relaxes in an axial direction.

16. A method of assembling at least two parts which constitute an object (2) with one another, comprising the steps of introducing a bolt (1) having a thread and an axis (A2) into the at least two parts so that a free end portion of the bolt (1) extends outwardly beyond a side of said parts; placing a friction washer (6) on said free end portion of said bolt so that said friction washer engages with said thread of said bolt (1) to create a turning friction between said washer (6) and said bolt and so as to abut against said side of the at least two parts; threadably connecting a nut (5) to said free end portion of said bolt (1) so as to abut against the friction washer (6) and to form an assembly; the washer having a body (7) having an axis (A1) and provided at one axial side with a first bearing face surface (8) adapted to cooperate with the nut (5) and having a facial friction with the nut (5), at an opposite axial side with a second bearing face surface (9) adapted to cooperate with the object (2) and having a facial friction with the object (2), and a third surface (10) adapted to cooperate with said thread of said bolt (1) in a turning resistant manner and located inside said body (7), the body including a radially inner part (7") having a radially outer surface and bolt thread engaging means (11) to connect with a thread of the bolt (1), and a radially outer part (7') having a radially inner surface, the radially outer and inner surfaces of the radially inner (7") and radially outer (7') parts of the body (7) cooperating with one another so that the radially inner part (7") can not rotate freely inside the radially outer part (7') during tightening but is displaceable axially relative to the radially outer part during bolt elongation; placing a torque power tool on the assembly so as to tighten or loosen the nut with a turning portion (22) of said torque power tool connected to the nut (5) to overcome a threaded friction with the bolt (1) and a facial friction with the friction washer (6) to turn the nut, and with a reaction portion (23) of the torque power tool connected to the washer to absorb a reaction force due to a facial friction of the friction washer (6) with the nut (5), and turning with the torque power tool the nut with a given force in one direction and applying to the body (7) of the washer (6) simultaneously said given force in an opposite direction, so that thereby only the nut (5) turns to elongate the bolt (1) and the body of the washer (6) remains rotation stationary, while the bolt does not turn but elongates or relaxes in an axial direction.

17. An assembly incorporating a power tool for fastening objects, comprising a housing (20) provided with an element (23) which is non-rotatable in use; a power drive (21) in said housing and provided with a driving element (22) which is rotatable in use; and a fastener part including a bolt (1) having a thread and an axis (A2) and introducible into parts forming an object (2), a nut (5) screwable on said bolt (1) and cooperating with said rotatable driving element (22), and a washer (6) according to any one of claims 1 to 14.

18. An assembly as defined in claim 17, wherein said tool has a turning mechanism (27, 28), said driving element (22) being formed as a projection which is connected with said turning mechanism and is turned by the latter.

## Patentansprüche

1. Scheibe (6), die zwischen einem Gegenstand (2) und einer Mutter (5) anzubringen ist, die gewindemäßig mit einem Bolzen (1) verbunden ist, der eine Achse (A2) hat und in den Gegenstand eingeführt ist, wobei der Gegenstand (2) mindestens zwei zusammenzubauende Teile aufweist, wobei die Scheibe einen Körper (7) aufweist, der eine Achse (A1) hat und mit einer ersten Lagerflächenoberfläche (8), die sich an einer axialen Seite befindet, zum Zusammenwirken mit der Mutter (5) ausgelegt ist und zwischen der und der Mutter Flächenreibung herrscht, einer zweiten Lagerflächenoberfläche (9), die sich an einer gegenüberliegenden axialen Seite befindet, zum Zusammenwirken mit dem Gegenstand (2) ausgelegt ist und zwischen der und dem Gegenstand Flächenreibung herrscht, und einer dritten Lagerflächenoberfläche (10), die zum drehresistenten Zusammenwirken mit einem Gewinde des Bolzens (1) ausgelegt ist und sich in dem Körper (7) befindet, versehen ist, wobei der Körper einen radial inneren Teil (7'') mit einer radial äußeren Fläche und einem Bolzengewindeeingriffsmittel (11), das zur Verbindung mit einem Gewinde des Bolzens (1) an der dritten drehresistenten Fläche ausgebildet ist, und einen radial äußeren Teil (7') mit einer radial inneren Fläche aufweist, **dadurch gekennzeichnet, dass** die radial äußeren und inneren Flächen des radial inneren (7'') und des radial äußeren (7') Teils miteinander zusammenwirken, so dass sich der radial innere Teil (7'') während des Festziehens nicht frei innerhalb des radial äußeren Teils (7') drehen kann, sondern bei der Bolzendehnung axial bezüglich des radial äußeren Teils verschoben wird, so dass sich nur die Mutter (5) dreht, um den Bolzen (1) zu dehnen oder zu entspannen, wenn die Mutter (5) mit einem gegebenen Drehmoment in eine Richtung gedreht wird und der Körper der Scheibe (6) gleichzeitig mit demselben Drehmoment in einer entgegengesetzten Richtung beaufschlagt wird, während der Körper der Scheibe (6) rotationsstationär bleibt und der Bolzen sich nicht dreht, sondern sich in einer axialen Richtung dehnt oder entspannt.

2. Scheibe nach Anspruch 1, wobei es sich bei der mindestens einen dritten drehresistenten Fläche (10) um eine radial innere Fläche des Körpers (7) handelt, die koaxial zu der Achse (A1) des Körpers ist und mit dem Bolzengewindeeingriffsmittel (11) versehen ist.

3. Scheibe nach Anspruch 2, ferner mit Mitteln, um das Bolzengewindeeingriffsmittel (11) während des Drehens der Mutter (5) in das Bolzengewinde zu drücken und einzuklemmen, und mit geneigten Flächenmitteln (12, 14), die an einem der Teile (7', 7'') vorgesehen sind und während des Drehens der Mutter (5) beaufschlagt werden, um den inneren Teil (7'') in einer radial nach innen weisenden Richtung zum Bolzen (1) hin zu drücken.

4. Scheibe nach Anspruch 3, ferner mit Stiftmitteln (15), die zwischen den Teilen (7', 7'') angeordnet sind und das geneigte Flächenmittel (14) beaufschlagen, um den inneren Teil (7'') in einer radial nach innen weisenden Richtung zum Bolzen (1) hin zu drücken.

5. Scheibe nach Anspruch 2, ferner mit Mitteln, um die Teile (7', 7'') miteinander zu verbinden, so dass sie sich zwar nicht frei bezüglich einander drehen, aber axial bezüglich einander bewegen können, wobei die Verbindungsmittel mehrere Keilverzahnungen (12) aufweisen, die an den Teilen vorgesehen sind und miteinander in Eingriff stehen.

6. Scheibe nach Anspruch 2, ferner mit Mitteln, um die Teile (7', 7'') miteinander zu verbinden, so dass sie sich zwar nicht frei bezüglich einander drehen, aber axial bezüglich einander bewegen können, wobei die Verbindungsmittel Mittel aufweisen, um die Teile mittels Presspassung miteinander zu verbinden.

7. Scheibe nach Anspruch 2, ferner mit Mitteln, um die Teile (7', 7'') miteinander zu verbinden, so dass sie sich zwar nicht frei bezüglich einander drehen, aber axial bezüglich einander bewegen können, wobei die Verbindungsmittel ein zwischen den Teilen vorgesehenes Keilmittel (13) aufweisen.

8. Scheibe nach Anspruch 2, 3 oder 4, wobei mindestens einer der Teile (7', 7'') eine nicht runde Fläche hat, die dem anderen der Teile gegenüberliegt und mit dem anderen Teil zusammenwirkt, so dass sich die Teile (7', 7'') zwar nicht frei bezüglich einander drehen, aber axial bezüglich einander bewegen können.

9. Scheibe nach Anspruch 2, 3 oder 4, wobei mindestens einer der Teile (7', 7'') einen Querschnitt hat, der mit dem anderen der Teile zusammenwirkt, so dass sich die Teile (7', 7'') zwar nicht frei bezüglich einander drehen, aber axial bezüglich einander bewegen können.

10. Scheibe nach Anspruch 2, ferner mit einem Mittel (16), um den inneren Teil (7'') zum Gewinde des Bolzens (1) hin zu drücken, wobei das Mittel zwischen einer Außerbetriebsposition, in der es den inneren Teil nicht zum Gewinde des Bolzens hin drückt, und einer Betriebsposition beweglich ist, in der es von einem äußeren Werkzeug zu dem inneren Teil (7'') hin verschoben wird, um den inneren Teil zum Gewinde des Bolzens (1) hin zu drücken.

11. Scheibe nach Anspruch 2, ferner mit einem Verbindungsmittel (17), um die Teile (7', 7'') miteinander zu verbinden, so dass sie sich zwar nicht frei bezüglich einander drehen, aber axial bezüglich einander bewegen können, wobei das Verbindungsmittel ein Zahnkranzmittel (17) aufweist, das in beide Teile eingreift.

12. Scheibe nach Anspruch 11, wobei das Zahnradmittel (17) mit einem Plattenmittel (17a) versehen ist, das zwischen dem Körper (7) und dem Gegenstand (2) angeordnet sein kann.

13. Scheibe nach Anspruch 2, ferner mit einem Verbindungsmittel (18), um die Teile miteinander zu verbinden, so dass sie sich zwar nicht frei bezüglich einander drehen, aber axial bezüglich einander bewegen können, wobei das Verbindungsmittel ein zwischen den Teilen vorgesehenes Keilmittel (18) aufweist.

14. Scheibe nach einem der vorhergehenden Ansprüche, wobei die zweite Lagerflächenoberfläche (9) so ausgebildet ist, dass sie gegenüber dem Gegenstand (2) eine hohe Reibung hat und beispielsweise aufgeraut ist.

15. Befestigungsvorrichtung, die mit einem Gewinde versehen ist, zur Verbindung von mindestens zwei Teilen, die einen Gegenstand (2) darstellen, mit einem Bolzen (1), der ein Gewinde und eine Achse (A2) aufweist und in die einen Gegenstand bildenden mindestens zwei Teile eingeführt werden kann, einer Mutter (5), die auf den Bolzen aufschraubbar ist, und einer Scheibe (6), die zwischen der Mutter (5) und dem Gegenstand (2) anzubringen ist, wobei die Scheibe einen Körper (7) aufweist, der eine Achse (A1) hat und mit einer ersten Lagerflächenoberfläche (8), die sich an einer axialen Seite befindet, zum Zusammenwirken mit der Mutter (5) ausgelegt ist und zwischen der und der Mutter Flächenreibung herrscht, einer zweiten Lagerflächenoberfläche (9), die sich an einer gegenüberliegenden axialen Seite befindet, zum Zusammenwirken mit dem Gegenstand (2) ausgelegt ist und zwischen der und dem Gegenstand Flächenreibung herrscht, und einer dritten Lagerflächenoberfläche (10), die zum drehresistenten Zusammenwirken mit einem Gewinde des Bolzens (1) ausgelegt ist und sich in dem Körper (7) befindet, versehen ist, wobei der Körper einen radial inneren Teil (7'') mit einer radial äußeren Fläche und einem Bolzengewindeeingriffsmittel (11) zur Verbindung mit einem Gewinde des Bolzens (1) und auch einen radial äußeren Teil (7') mit einer radial inneren Fläche aufweist, **dadurch gekennzeichnet, dass** die radial äußeren und inneren Flächen des radial inneren (7'') und des radial äußeren (7') Teils miteinander zusammenwirken, so dass sich der radial innere Teil (7'') während des Festziehens nicht frei innerhalb des radial äußeren Teils (7') drehen kann, sondern bei Bolzendehnung axial bezüglich des radial äußeren Teils verschoben wird, so dass sich nur die Mutter dreht, um den Bolzen (1) zu dehnen oder zu entspannen, wenn die Mutter (5) mit einem gegebenen Drehmoment in eine Richtung gedreht wird und der Körper (7) der Scheibe (6) gleichzeitig mit demselben Drehmoment in einer entgegengesetzten Richtung beaufschlagt wird, während der Körper der Scheibe (6) rotationsstationär bleibt und der Bolzen sich nicht dreht, sondern sich in einer axialen Richtung dehnt oder entspannt.

16. Verfahren zum Zusammenbau von mindestens zwei Teilen, die einen Gegenstand (2) darstellen, mit folgenden Schritten: ein Bolzen (1) mit einem Gewinde und einer Achse (A2) wird in die mindestens zwei Teile eingeführt, so dass sich ein freier Endabschnitt des Bolzens (1) über eine Seite der Teile hinaus nach außen erstreckt, eine Reibscheibe (6) wird auf den freien Endabschnitt des Bolzens platziert, so dass die Reibscheibe mit dem Gewinde des Bolzens (1) in Eingriff kommt, um zwischen der Scheibe (6) und dem Bolzen eine Drehreibung zu erzeugen, und um an der Seite der mindestens zwei Teile anzuliegen, eine Mutter (5) wird gewindemäßig mit dem freien Endabschnitt des Bolzens (1) verbunden, um an der Reibscheibe (6) anzuliegen und eine Anordnung zu bilden, wobei die Scheibe einen Körper (7) aufweist, der eine Achse (A1) hat und an einer axialen Seite mit einer ersten Lagerflächenoberfläche (8) versehen ist, die zum Zusammenwirken mit der Mutter (5) ausgelegt ist und zwischen der und der Mutter (5) Flächenreibung herrscht, an einer gegenüberliegenden axialen Seite mit einer zweiten Lagerflächenoberfläche (9), die zum Zusammenwirken mit dem Gegenstand (2) ausgelegt ist und zwischen der und dem Gegenstand (2) Flächenreibung herrscht, und einer dritten Lagerflächenoberfläche (10), die zum drehresistenten Zusammenwirken mit dem Gewinde des Bolzens (1) ausgelegt ist und sich in dem Körper (7) befindet, wobei der Körper einen radial inneren Teil (7'') mit einer radial äußeren Fläche und einem Bolzengewindeeingriffsmittel (11), das zur Verbindung mit einem Gewinde des Bolzens (1) ausgebildet ist, und einen radial äußeren Teil (7') mit einer radial inneren Fläche aufweist, wobei die radial äußeren und inneren Flächen des radial inneren (7'') und des radial äußeren (7') Teils des Körpers (7) miteinander zusammenwirken, so dass sich der radial innere Teil (7'') während des Festziehens nicht frei innerhalb des radial äußeren Teils (7') drehen kann, sondern bei Bolzendehnung axial bezüglich des radial äußeren Teils verschoben wird, ein kraftangetriebenes Drehmoment-Werkzeug wird so auf die Anordnung platziert, um die Mutter mit einem mit der Mutter (5) verbundenen Drehabschnitt (22) des kraftangetriebenen Drehmoment-Werkzeugs festzuziehen oder zu lockern, um zur Drehung der Mutter eine Gewindereibung mit dem Bolzen (1) und eine Flächenreibung mit der Reibscheibe (6) zu überwinden, und mit einem Reaktionsabschnitt (23) des mit der Scheibe verbundenen kraftangetriebenen Drehmoment-Werkzeugs eine auf eine Flächenreibung der Reibscheibe (6) mit der Mutter (5) zurückzuführende Reaktionskraft zu absorbieren, und die Mutter wird mittels des kraftangetriebenen Drehmoment-Werkzeugs mit einer gegebenen Kraft in eine Richtung gedreht und der Körper (7) der Scheibe (6) wird gleichzeitig in einer entgegengesetzten Richtung mit der gegebenen Kraft beaufschlagt, so dass sich dadurch nur die Mutter (5) dreht, um den Bolzen (1) zu dehnen, und der Körper der Scheibe (6) sich nicht dreht, während sich der Bolzen nicht dreht, sondern sich in einer axialen Richtung dehnt oder entspannt.

17. Anordnung einschließlich eines kraftangetriebenen Werkzeugs zur Befestigung von Gegenständen mit einem Gehäuse (20), das mit einem Element (23), versehen ist, das sich im Gebrauch nicht drehen lässt, einem Kraftantrieb (21) in dem Gehäuse, der mit einem Antriebselement (22) versehen ist, das im Gebrauch gedreht werden kann, und einem Befestigungsteil, der einen Bolzen (1), der ein Gewinde und eine Achse (A2) aufweist und in einen Gegenstand (2) bildende Teile eingeführt werden kann, eine Mutter (5), die auf den Bolzen (1) aufschraubbar ist und mit dem drehbaren Antriebselement (22) zusammenwirkt, und eine Scheibe (6) nach einem der Ansprüche 1 bis 14 aufweist.

18. Anordnung nach Anspruch 17, wobei das Werkzeug einen Drehmechanismus (27, 28) hat, wobei das Antriebselement (22) als ein Vorsprung ausgebildet ist, der mit dem Drehmechanismus verbunden ist und von diesem gedreht wird.

## Revendications

1. Rondelle (6) destinée à être appliquée entre un objet (2) et un écrou (5) connectés par un filetage avec un boulon (1) ayant un axe (A2) et qui est introduit dans l'objet, l'objet (2) comprenant au moins deux parties devant être assemblées, la rondelle comprenant un corps (7) ayant un axe (A1) et étant pourvue d'une première surface de face d'appui (8) située sur un côté coaxial, adapté pour coopérer avec l'écrou (5) et ayant une friction faciale avec l'écrou, une deuxième surface de face d'appui (9) située sur un côté axial opposé, adaptée pour coopérer avec l'objet (2) et ayant une friction faciale avec l'objet, et une troisième surface (10) adaptée pour coopérer avec un filetage du boulon (1) d'une manière résistant à la rotation et située à l'intérieur dudit corps (7), ledit corps comprenant une partie radialement intérieure (7'') ayant une surface radialement extérieure et un moyen d'engagement de filetage de boulon (11) formé sur ladite troisième surface résistant à la rotation pour se connecter avec un filetage du boulon (1), et comprenant également une partie radialement extérieure (7') ayant une surface radialement intérieure, **caractérisée en ce que** lesdites surfaces radialement extérieure et intérieure desdites parties radialement intérieure (7'') et radialement extérieure (7') coopèrent l'une avec l'autre de telle façon que ladite partie radialement intérieure (7'') ne peut pas tourner librement à l'intérieur de ladite partie radialement extérieure (7') durant le serrage mais est déplacée axialement par rapport à ladite partie radialement extérieure lors de l'allongement du boulon, de telle façon que, quand l'écrou (5) est tourné avec un couple donné dans une direction et que ledit corps de la rondelle (6) reçoit simultanément ledit couple donné dans une direction opposée, seul l'écrou (5) tourne pour allonger ou détendre le boulon (1) tandis que ledit corps de la rondelle (6) demeure stationnaire pendant la rotation et que le boulon ne tourne pas mais s'allonge ou se détend dans une direction axiale.

2. Rondelle selon la revendication 1, dans laquelle ladite au moins une troisième surface résistant à la rotation (10) est une surface radialement intérieure dudit corps (7) qui est coaxiale avec ledit axe (A1) dudit corps et est pourvue dudit moyen d'engagement de filetage de boulon (11).

3. Rondelle selon la revendication 2, comprenant en outre un moyen pour presser et coincer ledit moyen d'engagement de filetage du boulon (11) dans le filetage du boulon durant la rotation de l'écrou (5) et comprenant un moyen de surface inclinée (12, 14) prévu sur une desdites parties (7', 7'') et sur laquelle une pression est exercée durant la rotation de l'écrou (5) de manière à presser ladite partie intérieure (7'') dans une direction radialement intérieure vers le boulon (1).

4. Rondelle selon la revendication 3, comprenant en outre un moyen de goupille (15) agencé entre lesdites parties (7', 7'') et agissant sur ledit moyen de surface inclinée (14) pour presser ladite partie intérieure (7'') dans une direction radialement intérieure vers le boulon (1).

5. Rondelle selon la revendication 2, comprenant en outre un moyen pour connecter lesdites parties (7', 7'') l'une avec l'autre de telle façon qu'elles ne sont pas libres de tourner relativement l'une par rapport à l'autre mais peuvent se déplacer axialement l'une par rapport à l'autre, ledit moyen de connexion comprenant une pluralité de cannelures (12) prévues sur lesdites parties et s'engageant les unes avec les autres.

6. Rondelle selon la revendication 2, comprenant en outre un moyen pour connecter lesdites parties (7', 7'') l'une avec l'autre de telle façon qu'elles ne sont pas libres de tourner relativement l'une par rapport à l'autre mais peuvent se déplacer axialement l'une par rapport à l'autre, ledit moyen de connexion comprenant un moyen pour l'assemblage à la presse desdites parties l'une avec l'autre.

7. Rondelle selon la revendication 2, comprenant en outre un moyen pour connecter lesdites parties (7', 7") l'une avec l'autre de telle façon qu'elles ne sont pas libres de tourner relativement l'une par rapport à l'autre mais peuvent se déplacer axialement l'une par rapport à l'autre, ledit moyen de connexion comprenant un moyen de clavette (13) prévu entre lesdites parties.

8. Rondelle selon la revendication 2, 3 ou 4, dans laquelle au moins une desdites parties (7', 7") à une surface non ronde faisant face à l'autres desdites parties et coopérant avec ladite autre partie de telle façon que lesdites parties (7', 7'') ne sont pas libres de tourner relativement l'une par rapport à l'autre mais peuvent se déplacer axialement l'une par rapport à l'autre.

9. Rondelle selon la revendication 2, 3 ou 4, dans laquelle au moins une desdites parties (7', 7'') à une coupe transversale qui coopère avec l'autre desdites parties de telle façon que lesdites parties (7', 7") ne sont pas libres de tourner relativement l'une par rapport à l'autre mais peuvent se déplacer axialement l'une par rapport à l'autre.

10. Rondelle selon la revendication 2, comprenant en outre un moyen (16) pour presser ladite partie intérieure (7'') vers le filetage du boulon (1) et pouvant être déplacée entre une position non opérationnelle dans laquelle il ne presse pas ladite partie intérieure vers le filetage du boulon et une partie opérationnelle dans laquelle il est déplacé par un outil extérieur vers ladite partie intérieure (7'') de manière à presser ladite partie intérieure vers le filetage du boulon (1).

11. Rondelle selon la revendication 2, comprenant en outre un moyen (17) pour connecter lesdites parties (7', 7'') l'une avec l'autre de telle façon qu'elles ne sont pas libres de tourner relativement l'une par rapport à l'autre mais peuvent se déplacer axialement l'une par rapport à l'autre, ledit moyen de connexion comprenant un moyen de couronne dentée (17) en engagement avec lesdites deux parties.

12. Rondelle selon la revendication 11, dans laquelle ledit moyen de couronne dentée (17) est pourvu d'un moyen de plaque (17a) adapté pour être positionné entre ledit corps (7) et l'objet (2).

13. Rondelle selon la revendication 2, comprenant en outre un moyen (18) pour connecter lesdites parties l'une avec l'autre de telle façon qu'elles ne sont pas libres de tourner relativement l'une par rapport à l'autre mais peuvent se déplacer axialement l'une par rapport à l'autre, ledit moyen de connexion comprenant un moyen de coin (18) prévu entre lesdites parties.

14. Rondelle selon l'une quelconque des revendications précédentes, dans laquelle ladite deuxième surface de face d'appui (9) est formée de façon à avoir un forte friction relativement à l'objet (2), par exemple en étant rendue rugueuse.

15. Fixation filetée pour connecter au moins deux parties qui constituent un objet (2), comprenant un boulon (1) ayant un filetage et un axe (A2) et pouvant être introduit dans les au moins deux partis constituant un objet ; un écrou (5) pouvant se visser sur ledit boulon ; et une rondelle (6) destinée à être appliquée entre ledit écrou (5) et ledit objet (2), ladite rondelle comprenant un corps (7) ayant un axe (A1) et étant pourvue d'une première surface de face d'appui (8) située sur un côté axial, adaptée pour coopérer avec ledit écrou (5) et ayant une friction faciale avec l'écrou, une deuxième surface de face d'appui (9) située sur un côté axial opposé, adaptée pour coopérer avec le ledit objet (2) et ayant une friction faciale avec l'objet, et une troisième surface (10) adaptée pour coopérer avec ledit filetage dudit boulon (1) d'une manière résistant à la rotation et située à l'intérieur dudit corps (7), ledit corps comprenant une partie radialement intérieure (7'') ayant une surface radialement extérieure et un moyen d'engagement du filetage de boulon (11) pour se connecter avec un filetage du boulon (1), et comprenant également une partie radialement extérieure (7') ayant une surface radialement intérieure, **caractérisée en ce que** lesdites surfaces radialement extérieure et intérieure desdites parties radialement intérieure (7'') et radialement extérieure (7') coopèrent l'une avec l'autre de telle façon que ladite partie radialement intérieure (7'') ne peut pas tourner librement à l'intérieur de ladite partie radialement extérieure (7') durant le serrage mais est déplacée axialement par rapport à ladite partie radialement extérieure lors de l'allongement du boulon, de telle façon que, quand l'écrou (5) est tourné avec un couple donné dans une direction et que ledit corps (7) de la rondelle (6) reçoit simultanément ledit couple donné dans une direction opposée, seul ledit écrou tourne pour allonger ou détendre ledit boulon (1) tandis que ledit corps (7) de la rondelle demeure stationnaire pendant la rotation et que ledit boulon ne tourne pas mais s'allonge ou se détend dans une direction axiale.

16. Procédé d'assemblage d'au moins deux parties qui constituent un objet (2) l'une avec l'autre, comprenant les étapes d'introduction d'un boulon (1) ayant un filetage et un axe (A2) dans les au moins deux parties de telle façon qu'une partie d'extrémité libre du boulon (1) s'étend extérieurement au-delà d'un côté desdites parties ; de mise en place d'une rondelle de friction (6) sur ladite partie d'extrémité libre dudit boulon de telle façon que ladite rondelle de friction est en engagement avec ledit filetage dudit boulon (1) pour créer une friction de rotation entre ladite rondelle (6) et ledit boulon et de manière à être en aboutement contre ledit côté des au moins deux parties ; de connexion par filetage d'un écrou (5) à ladite partie d'extrémité libre dudit boulon (1) de manière à être en aboutement contre la rondelle de friction (6) et à former un ensemble ; la rondelle ayant un corps (7) ayant un axe (A1) et étant pourvue sur un côté axial d'une première surface de face d'appui (8) adaptée pour coopérer avec l'écrou (5) et ayant une friction faciale avec l'écrou (5), à un côté axial opposé avec une deuxième surface de face d'appui (9) adaptée pour coopérer avec l'objet (2) et ayant une friction faciale avec l'objet (2), et une troisième surface (10) adaptée pour coopérer avec ledit filetage dudit boulon (1) d'une manière résistant à la rotation et située à l'intérieur dudit corps (7), le corps comprenant une partie radialement intérieure (7'') ayant une surface radialement extérieure et un moyen d'engagement de filetage de boulon (11) pour se connecter avec un filetage du boulon (1), et une partie radialement extérieure (7') ayant une surface radialement intérieure, les surfaces radialement extérieure et intérieure des parties radialement intérieure (7'') et radialement extérieure (7') du corps (7) coopérant l'une avec l'autre de telle façon que la partie radialement intérieure (7") ne peut pas tourner librement à l'intérieur de la partie radialement extérieure (7') durant le serrage mais peut se déplacer axialement par rapport à la partie radialement extérieure durant l'allongement du boulon ; de positionnement d'un outil de serrage motorisé sur l'ensemble pour serrer ou desserrer l'écrou avec une partie de rotation (22) dudit outil de serrage motorisé connecté à l'écrou (5) pour surmonter une friction de filetage avec le boulon (1) et une friction faciale avec la rondelle de friction (6) pour faire tourner l'écrou, et avec une partie de réaction (23) de l'outil de serrage motorisé connecté à la rondelle pour absorber une force de réaction due à une friction faciale de la rondelle de friction (6) avec l'écrou (5), et la rotation avec l'outil de serrage motorisé de l'écrou avec une force donnée dans une direction et en appliquant au corps (7) de la rondelle (6) simultanément ladite force donnée dans une direction opposée, de telle façon que seulement l'écrou (5) tourne pour allonger le boulon (1) et le corps de la rondelle (6) demeure stationnaire pendant la rotation, tandis que le boulon ne tourne pas mais s'allonge ou se détend dans une direction axiale.

17. Ensemble comprenant un outil de serrage motorisé pour assembler des objets, comprenant un logement (20) pourvu d'un élément (23) qui ne tourne pas durant l'utilisation ; un entraînement motorisé (21) dans ledit logement et pourvu d'un élément d'entraînement (22) qui tourne durant l'utilisation ; et une pièce de fixation comprenant un boulon (1) ayant un filetage et un axe (A2) et pouvant être introduit dans les parties constituant un objet (2), un écrou (5) qui se visse sur ledit boulon (1) et coopérant avec ledit élément d'entraînement rotatif (22), et une rondelle (6) selon l'une quelconque des revendications 1 à 14.

18. Ensemble selon la revendication 17, dans lequel ledit outil comprend un mécanisme tournant (27, 28), ledit élément d'entraînement (22) étant sous la forme d'une partie saillante qui est connectée avec ledit mécanisme tournant et qui est tournée par ce dernier.
